# EUROPEAN PATENT APPLICATION

(11) **EP 1 881 320 A1**
(43) Date of publication of application: **23.01.2008**
(21) Application number: 06014889.7
(22) Date of filing: 18.07.2006
(51) Int. Cl.: G01N 21/954

(54) **Apparatus for testing a seam end hook**

(71) Applicant: Impress Group B.V., 7418 AH Deventer (NL)
(72) Inventor: Wout, Gilles, 8014 JR Zwolle (NL)
(74) Representative: Prins, Hendrik Willem

(57) **Abstract**

The invention relates to an apparatus for testing a seam end hook, comprising:
i) a support for the end hook in a test position;
ii) visualization means for visualizing the end hook in the test position; and
iii) illumination means for illuminating the end hook to be visualized.

## Description

The present invention relates to an apparatus for testing a seam end hook.

A seam forms the tight connection between the body and the end of a container, preferably a metal container. The seam provides the mechanical connection which is tight and thereby avoids contamination of the content of the container. The seam is formed in a seaming apparatus, preferably in two consecutive operations. These apparatuses generally function at high speed but still provide seams with low variation in form. Accordingly, regular sampling for testing the formed seam is possible. Testing of the container seam relates to its tightness and the dimensions of the seam. Dimensions to be tested comprise the seam length and thickness, the body hook length, the end hook length, the overlap of the end hook and body hook, and the body hook butting. The end hook is tested for the presence of wrinkles and puckers. This testing results in the rating of the wrinkles and/or puckers which rating is to comply with a set limit which relates to a sufficient tightness of the seam.

During the formation of the seam, in generally two operations, the diameter of the end flange of the container end is reduced. This results in the formation of waves which will be ironed out in the second seaming operation. However, sharp waves are not ironed out but will result in the formation of puckers. The presence and the dimensions of the wrinkles and puckers may interfere with the tightness of the seam, particularly in relation to the body hook which is resting in a compound at the inside of the end hook.

Accordingly, there is a need for a reliable and preferably objective testing of the seam end hook and the rating of the possibly present wrinkles and/or puckers.

In the design of new containers end seams using thinner and harder metal for the container end and/or container body, the risk for the formation of more and larger wrinkles and/or puckers is relatively high. Accordingly, there is a need for a testing apparatus which is a design tool in designing new containers using new materials which are economically more beneficial.

The above mentioned needs are fulfilled by the provision according to the invention of an apparatus for testing a seam end hook, comprising:
i) a support for supporting the end hook in a test position;
ii) visualization means for visualizing the end hook in the test position; and
iii) illumination means for illuminating the end hook to be visualized.

The apparatus according to the invention comprises a support for the end hook to be tested. In this test position the end hook is monitored by visualization means which visualize the end hook such that the visualized end hook may be inspected and rated in relation to the presence of wrinkles and/or puckers. The apparatus further comprises illumination means for illuminating the end hook in the test position such that the visualized end hook is of best quality. It is noted that these illumination means may be an intrinsic part of the apparatus or may be separate illumination means available in the surroundings where the apparatus according to the invention is used.

According to a preferred embodiment the apparatus according to the invention further comprises positioning means for positioning the end hook in the test position. Accordingly, the end hook to be tested in the test position is always at an optimal distance from the visualization means resulting in the best quality and sharp visualized end hook. An example of preferred positioning means are spaced apart positioning means. The end hook to be tested is pressed against the positioning pins and is then in the test position. Furthermore, using such pins it is possible that end hooks of various diameters (such as 65-99 mm) may be tested in one and the same apparatus.

According to a preferred embodiment the apparatus according to the invention further comprises arresting means for arresting the end hook in the test position. Using such arresting means there is no need for manually maintaining the end hook to be visualized in the test position. This will improve the quality of the visualized end hook. A preferred example of the arresting means is at least one magnet which, due to the magnetic force, arrests the end hook to be tested in the test position. Another preferred example of arresting means are clamping means which clamp the end hook to be tested in the test position.

According to another preferred embodiment the apparatus according to the invention further comprises guiding means for guiding the end hook to be tested into the test position. These guiding means facilitate the handling of the end hook to be tested and allows a smooth positioning of the end hook in the test position. A preferred example of the guiding means is one or preferably two blocks having an inclined guiding surface over which inclined guiding surface the end hook is transferred into the test position.

According to a preferred embodiment the visualization means comprise a camera. Accordingly, it is possible by electronic means to visualize not by eye but by camera the end hook for rating the wrinkles and/or puckers. Preferably, the camera is a web cam or digital camera such that the end hook visualized at higher magnification may be projected on a screen and rated for the presence of wrinkles and/or puckers. According to a preferred embodiment the apparatus is provided with rating means for objectively measuring and rating of the visualized end hook the wrinkles and/or puckers and determine whether the set rating limit is complied with and the seam in relation to its end hook form complies with the quality terms set. Accordingly, objectively is determined whether the seam produced guarantees the tightness of the container.

It is noted that the apparatus described and defined above is relatively cheap and simple in its construction and thus may be used on site near the apparatuses for producing the seam. Furthermore, the seam may be produced and tested using all available and known materials for the body and end of the container, such as steel, coated steel and the like.

Mentioned and other features of the apparatus for testing a seam end hook according to the invention will be further illustrated in relation to several embodiments which are given for illustrative purposes and not intended to limit the invention to any extent.

These embodiments will be described with reference to the annexed drawings in which:
figure 1A - 1D illustrate schematically in cross section the formation of a seam end hook in two operations;
figure 2A and 2B show the cutting of a seam thereby forming the seam end hook to be tested;
figure 3 shows schematically the various means used in an apparatus for testing a seam end hook according to the invention;
figure 4 shows the visualized end hook and the wrinkle and pucker rating;
figures 5 and 6 show a more realistic apparatus according to the invention taken at different angles; and
figure 7 another embodiment of the apparatus for testing a seam end hook according to the invention viewed at a similar angle as the apparatus in figure 6.

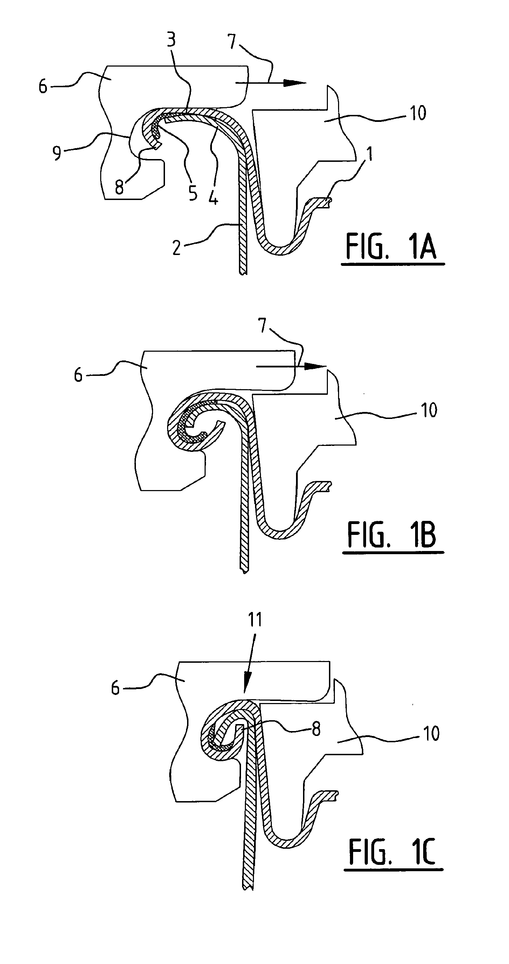

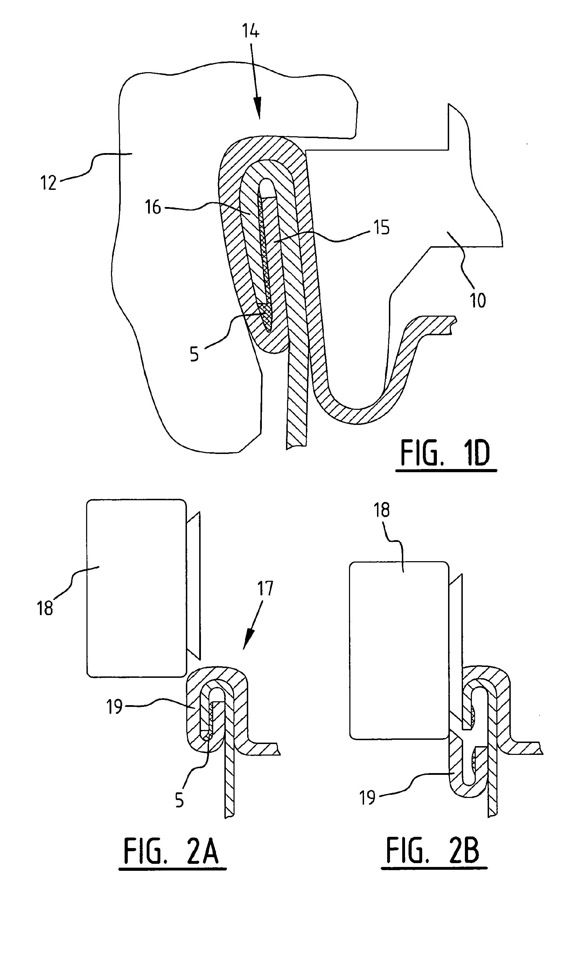

Figure 1A - 1C shows the first seaming operation. A container end 1 is placed on a container body 2 such that a curl 3 rests on a body flange 4 via a compound 5 applied in the curl 3. The first stage of the seam is formed by moving a roll 6 in the direction of the arrow 7 whereby the end flange 8 of the curl 3 moves inwardly following a curve 9 of the roll 6 (see figure 1B). Further movement of the roll 6 towards a chuck 10 still following the arrow 7 results in the formation of a pre-seam as illustrated in figure 1C. Due to the diameter reduction of the curl 3 and in particular of the end flange 8 results in the formation of wrinkles or waves. In the second seaming operation using a second roll 12 and the chuck 10 the formed waves are ironed out thereby forming the seam 14 (see figure 1D).

The seam 14 comprises an end hook 15 enclosed and overlapping with a body hook 16 with interposed compound 5. The end hook is to be tested in relation to its flatness and rated in relation to the presence and size of wrinkles and/or puckers. The wrinkles may appear over the circumference of the end hook. Wrinkles may be ironed out by additional and a more tighter second seaming operation.

To the contrary, puckers only appear locally (originating from sharp waves formed during the first seaming operation) and cannot be ironed out. In this respect it is noted that it is to be avoided that the seam is over-tightened.

Figure 2A and 2B show the demounting of the end hook of a seam 17 using a cutting apparatus 18. As illustrated in figure 2B, cutting using the cutting apparatus 18 is performed such that the external seam part 19 is cut off thereby loosening and demounting the end hook 19 to be tested and rated for wrinkles and/or puckers.

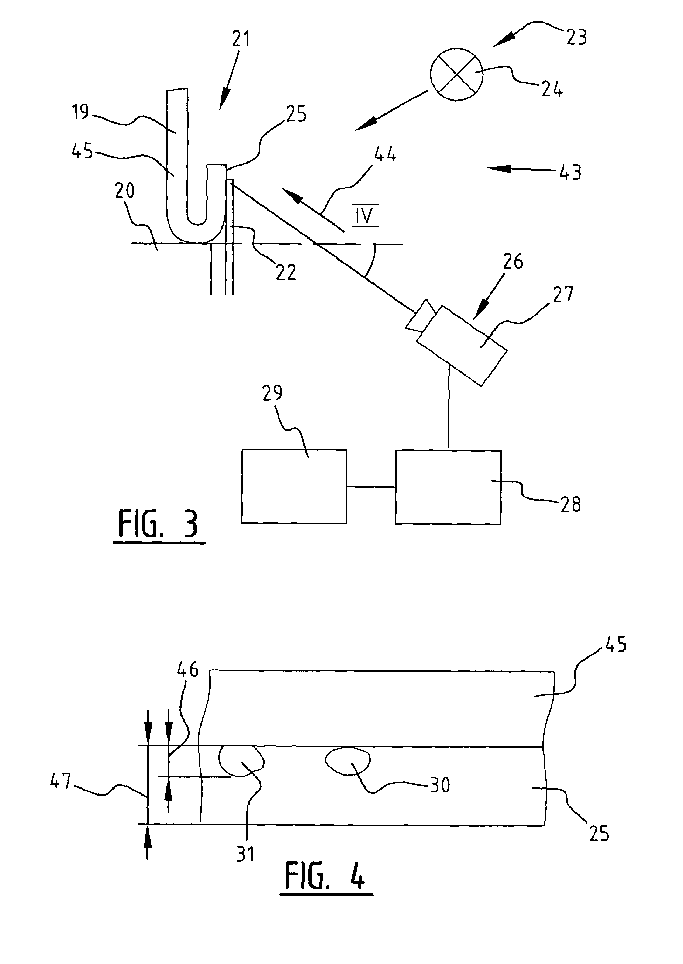

Figure 3 shows schematically an apparatus 43 of the invention for carrying out the testing of the end hook 19. The testing apparatus comprises a support 20 for supporting the end hook 19 in the testing position 21. The end hook 19 is positioned in the testing position 21 by pressing the end hook 19 against positioning means having the form of positioning pins 22. The end hook 19 is illuminated by illumination means 23 such as a lamp 24 emitting diffuse light on the surface 25 of the end hook which in the seam is facing the body wall 2.

The apparatus 43 according to the invention comprises visualization mean 26 positioned at an appropriate angle and having the form of a digital camera 27. The camera 27 is connected to a processing unit 28. The picture or image of the digital camera is interpreted and projected on a screen 29. In the processing unit 28 the presence of wrinkles and/or puckers is rated by a software program and included on the screen 29 where the inspector monitors the end hook image 19 and makes the final testing of the end hook 19.

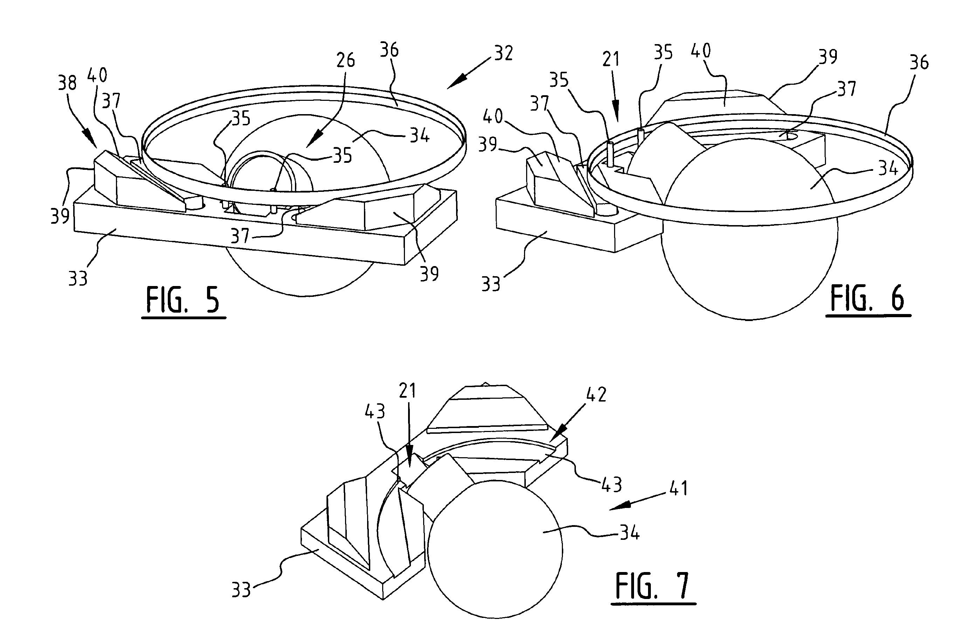

Figure 4 shows the visualized end hook by the visualization means 26 according to the arrow 44. Shown is the surface 25 in which puckers 30 and/or wrinkles 31 are present. Behind this surface 26 is the external seam part 45. The rating is such that the end hook wrinkle or pucker depth 46 is determined relative to the end hook length 47. In the illustrated end hook 19 the wrinkle rating is about 40%.

Figures 5 and 6 show another apparatus 32 according to the invention. The apparatus 32 comprises a support table 33, visualization means 26 in the form of a web cam 34 and further positioning means in the form of two positioning pins 35 against which the end hook 36 to be tested is pressed into the testing position 21.

The support table 33 is provided with two magnets 37 onto which the end hook 36 is arrested due to magnetic force while maintained in the test position pressed against the positioning pins 35. Accordingly, the testing by visualization using the web cam 34 is easy, reliable and provides good quality end hook images. The end hook 36 is transferred into its testing position 21 by sliding over and guided by the guiding means 38 having the form of blocks 39 provided with inclined guiding surfaces 40.

Figure 7 shows another embodiment of an apparatus 41 according to the invention.

In comparison to the apparatus 32 illustrated in figures 5 and 6, the positioning means 42 comprise an edge or groove 43 into which the end hook may be placed into the testing position 21. As shown in figure 7 the support table 33 is provided with an inclined surface 43 allowing best visualization by the visualization means 34 of the end hook 36 residing in the test position 21.

It is noted that in relation to the apparatuses 32 and 41 illumination means are not shown. Use could be made of external illumination means or visualization means being an integral part of the apparatus. The whole apparatus may be included within a casing (not shown) which may improve the quality further of the end hook image.

## Claims

1. Apparatus for testing a seam end hook, comprising:
i) a support for the end hook in a test position;
ii) visualization means for visualizing the end hook in the test position; and
iii) illumination means for illuminating the end hook to be visualized.

2. Apparatus according to claim 1, further comprising position means for positioning the end hook in the test position.

3. Apparatus according to claim 2, wherein the positioning means comprise spaced apart positioning pins.

4. Apparatus according to claim 2 of 3, wherein the positioning means comprise a positioning groove or positioning edge.

5. Apparatus according to any of the claims 1-4, further comprising arresting means for arresting the end hook in the test position.

6. Apparatus according to claim 5, wherein the arresting means comprise at least one magnet.

7. Apparatus according to claim 5 or 6, wherein the arresting means comprise clamping means.

8. Apparatus according to any of the claims 1-7, further comprising guiding means for guiding the end hook to be tested into the test position.

9. Apparatus according to claim 8, wherein the guiding means comprise at least one block having an inclined guiding surface.

10. Apparatus according to any of the claims 1-9, wherein the visualization means comprise a camera.

11. Apparatus according to claim 10, wherein the camera is a webcam or a digital camera.

12. Apparatus according to claim 10 or 11, wherein the visualization means comprise a screen for projecting the end hook image.

13. Apparatus according to any of the claims 1-12, comprising means for rating wrinkles and/or puckers visualized on the end hook image.
